# EUROPÄISCHE PATENTSCHRIFT

(11) **EP 1 734 245 B1**
(45) Veröffentlichungstag und Bekanntmachung des Hinweises auf die Patenterteilung: **31.10.2007**
(21) Anmeldenummer: 05013061.6
(22) Anmeldetag: 16.06.2005
(51) Int. Cl.: F02F 11/00, F16J 15/08

(54) **Mehrlagige metallische Flachdichtung**
Multi-layer metallic gasket
Joint métallique multicouche

(43) Veröffentlichungstag der Anmeldung: 20.12.2006
(73) Patentinhaber: REINZ-Dichtungs-GmbH, 89233 Neu-Ulm (DE)
(72) Erfinder: Ruess, Bernd, 89269 Voehringen (DE); Hoehe, Kurt, 89129 Langenau (DE); Goettler, Andreas, 89073 Ulm (DE)
(74) Vertreter: Tomerius, Isabel

(56) Entgegenhaltungen:
- EP-A- 0 691 489
- US-A1- 2004 046 332
- PATENT ABSTRACTS OF JAPAN Bd. 007, Nr. 041 (M-194), 18. Februar 1983 (1983-02-18) -& JP 57 190738 A (RIYOUTA KAMAKARI), 24. November 1982 (1982-11-24)

## Beschreibung

Die Erfindung betrifft eine metallische Flachdichtung mit wenigstens zwei übereinander angeordneten Dichtungslagen, die innerhalb wenigstens eines Verbindungsbereiches miteinander verbunden sind. Die Verbindung der Dichtungslagen untereinander dient der Erleichterung der Handhabung und fixiert die einzelnen Dichtungslagen in vorgegebener Orientierung zueinander.

Häufig werden Dichtungslagen miteinander verschweißt oder vernietet. Beide Verbindungsverfahren sind jedoch relativ langsam. Das Schweißen hat zudem den Nachteil, dass es wartungsintensiv ist und nur bei Dichtungslagen angewendet werden kann, die nicht mit einer Beschichtung aus Kunststoff versehen sind. Im Falle der Nietverbindung werden mit den Nieten zusätzliche Komponenten benötigt, welche die Kosten der Dichtung erhöhen. Ein weiterer Nachteil ist, dass durch die Nietverbindung eine Materialverdickung erzeugt wird. Diese Materialverdickung kann, wenn sie sich im Pressungsbereich befindet, also in dem Bereich der Dichtungsfläche, die zwischen den abzudichtenden Gegenflächen zu liegen kommt, zu einer Beeinträchtigung der Dichtfunktion führen. Aus diesem Grund werden solche oder ähnliche Lagenverbindungen, die zu einer Materialverdickung führen, in aller Regel auf Verbindungslaschen angeordnet, welche über die Außenkontur der Dichtung vorspringen. Diese Verbindungslaschen benötigen jedoch zusätzliches Material, wodurch sich der Preis der Dichtung verteuert und auch die Handhabbarkeit der Dichtung beeinträchtigt werden kann.

Es sind auch Lagenverbindungen bekannt, in denen die Verbindungen ohne zusätzliche Verbindungselemente wie Nieten hergestellt werden. Hierzu wird beispielsweise in einer der Dichtungslagen eine Durchgangsöffnung vorgesehen, durch welche eine Befestigungslasche der benachbarten Dichtungslage hindurch geführt und auf den die Durchgangsöffnung umgebenden Randbereich der anderen Dichtungslage zurückgebogen wird, um so die beiden Dichtungslagen miteinander zu verklammern. Diese Lösung hat jedoch den Nachteil, dass im Randbereich der Durchgangsöffnung eine Materialverdickung erzeugt wird. Aus den genannten Gründen werden diese Verbindungen auf Verbindungslaschen angeordnet, welche über die Außenkontur der Dichtung vorspringen, wie dies beispielsweise in der DE 20110331 U1 beschrieben ist. Mit Verwendung der Verbindungslaschen treten jedoch die oben beschriebenen Nachteile auf.

Vorteilhafter sind daher grundsätzlich solche Verbindungstechniken, bei denen es nicht zu einer Materialverdickung im Verbindungsbereich kommt und welche deshalb auch innerhalb des Pressungsbereichs der Dichtung anwendet werden können. Eine derartige Lagenverbindung ist beispielsweise in der DE 19823115 C1 beschrieben. Im Pressungsbereich sind mehrere im Wesentlichen rechteckige Verbindungsbereiche vorhanden. In einer ersten Dichtungslage weist der jeweilige Verbindungsbereich eine in etwa der Fläche des rechteckigen Verbindungsbereichs entsprechende Ausnehmung auf. An den gegenüberliegenden Längsseiten des Rechtecks ragen jedoch bogenförmige Vorsprünge in die Aussparung hinein, so dass sich eine insgesamt hundeknochenartige Öffnung ergibt. In der benachbarten Dichtungslage sind in den Bereich, welcher der Öffnung gegenüberliegt, zwei parallele Schlitze eingestanzt, deren Lage im Wesentlichen der Lage der Längsseiten des Rechtecks in der benachbarten Lage entspricht. Zur Verbindung der beiden Dichtungslagen wird der an seiner Stirnseite noch mit der Dichtungslage verbundene Streifen in Richtung auf die benachbarte Dichtungslage gedrückt und an den in die Öffnung ragenden bogenförmigen Vorsprüngen vorbeigeschoben, so dass der Streifen hinter den bogenförmigen Vorsprüngen einschnappt. Durch die auf diese Weise erzeugte Rastverbindung werden die beiden Dichtungslagen miteinander verbunden und gegeneinander fixiert. Nachteilig an dieser Verbindungsart ist jedoch, dass die einzelnen Verbindungspunkte keine verschiebungssichere Positionierung der beiden Dichtungslagen gegeneinander ermöglichen. Zur Herstellung der Rastverbindungen ist zudem ein Material erforderlich, das ausreichend federelastisch ist und sich hinreichend wieder zurückstellt. Auch ein unbeabsichtigtes Lösen der Rastverbindung ist nicht völlig ausgeschlossen, da sich die elastische Verbindung bei entsprechender Krafteinwirkung auch wieder zurückverformen und damit lösen kann.

Aufgabe der Erfindung ist es entsprechend, eine metallische Flachdichtung mit wenigstens zwei übereinander angeordneten Dichtungslagen anzugeben, die auf sichere Art und Weise im Pressungsbereich der Dichtung miteinander verbunden werden können. Die Dichtungslagen sollten sich zudem in einem kostengünstigen Verfahren verbinden lassen, bei welchem sich die benötigten Schritte und Werkzeuge gut in die anderen Verfahrensschritte bei der Herstellung der Dichtung integrieren lassen. Die Verbindung der Dichtungslagen sollte zudem für eine möglichst genaue Positionierung derselben zueinander sorgen.

Die Lösung dieser Aufgabe gelingt mit der metallischen Flachdichtung gemäß Anspruch 1 sowie dem Verfahren gemäß Anspruch 8. Bevorzugte Ausführungsformen und Verfahrensvarianten sind den jeweiligen Unteransprüchen zu entnehmen.

In einem ersten Aspekt betrifft die Erfindung also eine metallische Flachdichtung mit wenigstens zwei übereinander angeordneten Dichtungslagen, die innerhalb wenigstens eines Verbindungsbereiches miteinander verbunden sind. Hierfür ist im Verbindungsbereich in jeder der beiden Dichtungslagen eine Durchgangsöffnung vorhanden, von deren Rand jeweils wenigstens ein mit der jeweiligen Dichtungslage verbundener Vorsprung ins Innere der Durchgangsöffnung hineinragt. Die Verbindung zwischen den beiden Dichtungslagen im Verbindungsbereich ist dadurch erhältlich, dass der wenigstens eine Vorsprung der ersten Dichtungslage zumindest bereichsweise aus der Ebene der ersten Dichtungslage heraus in Richtung auf die zweite Dichtungslage hin verformt wird. Dabei ist der Vorsprung vor dem Verformen so ausgebildet, dass er, wenn er in der Projektion in die Ebene der zweiten Dichtungslage betrachtet wird, mit dem wenigstens einen in dieser Dichtungslage vorhandenen Vorsprung nicht überlappt. Der Vorsprung der ersten Dichtungslage wird soweit verformt, bis zumindest einer seiner Außenrandabschnitte in einer Ebene hinter einem benachbarten Außenrandabschnitt eines Vorsprungs der zweiten Dichtungslage zu liegen kommt. Anschließend wird zumindest einer der benachbarten Außenrandabschnitte derart verstemmt, dass der Vorsprung der ersten Dichtungslage den Vorsprung der zweiten Dichtungslage im Bereich der benachbarten Außenrandabschnitte hintergreift.

Durch den so erzeugten Hinterschnitt der ersten Dichtungslage hinter die zweite Dichtungslage werden beide Dichtungslagen fest miteinander verbunden. Im Ergebnis unterscheidet sich die erfindungsgemäße Verbindung von den Rastverbindungen, wie sie in der DE 19823115 C1 beschrieben sind, insbesondere dadurch, dass in der Erfindung die Verbindung zwischen den Dichtungslagen nicht durch ein elastisches Einschnappen erzeugt wird, sondern durch Verstemmen zumindest eines der Außenrandabschnitte der Vorsprünge der beiden Dichtungslagen, die zur Verbindung dienen. Durch das Verstemmen wird Material aus dem Außenrandabschnitt des Vorsprungs seitlich über den Außenrand des Vorsprungs heraus gepresst. Die Hinterschneidung des Vorsprungs der anderen Dichtungslage kommt also nicht aufgrund einer elastischen Verformung des Materials des Vorsprungs zustande, sondern aufgrund einer plastischen Verformung, Aufgrund dessen ist die Verbindung der beiden Dichtungslagen im Falle der Erfindung deutlich stabiler als im Falle der elastischen Rastverbindungen des Standes der Technik. Zudem ist die erfindungsgemäße Verbindungstechnik vielseitiger einsetzbar, da sie kein elastisches Material als Ausgangsmaterial der Dichtungslagen erfordert. Geeignet sind vielmehr grundsätzlich alle metallischen Materialien, auch wenn sie keine oder nur geringe elastische Eigenschaften aufweisen. Beispiele geeigneter metallischer Materialien sind alle Edelstähle, Kohlenstoffstahl oder Federstahl.

Vorteilhaft an der erfindungsgemäßen metallischen Flachdichtung ist weiterhin, dass die Verbindung zwischen den Dichtungslagen im Pressungsbereich der Flachdichtung angeordnet werden kann, da die erfindungsgemäße Verbindung beider Dichtungslagen nicht zu einer Materialverdickung in diesem Bereich führt. Die Hinterschnittverbindung zwischen beiden Dichtungslagen wird vielmehr im Bereich der Durchgangsöffnungen im Verbindungsbereich aufgenommen, ohne dass Material über die Oberflächen der beiden miteinander verbundenen Dichtungslagen heraussteht. Selbst wenn zur Herstellung der Verbindung zwischen beiden Dichtungslagen lediglich ein Vorsprung einer der Dichtungslagen in Richtung auf die andere Dichtungslage herausgebogen wird und der Vorsprung, welcher durch den herausgeformten Vorsprung hintergriffen werden soll, zunächst in seiner Ebene verbleibt und damit der herausgeformte Vorsprung anfangs über die Ebene der gegenüberliegenden Dichtungslage vorsteht, können die verbundenen Vorsprünge anschließend in die Durchgangsöffnungen im Verbindungsbereich zurückgebogen werden, so dass sie zu keiner Seite mehr über die Oberflächen der verbundenen Dichtungslagen hervorstehen. Diese Zentrierung der Vorsprünge im Bereich der Durchgangsöffnung im Verbindungsbereich kann aktiv durch Hereindrücken der Vorsprünge in die Durchgangsöffnungen erfolgen oder aber zumindest teilweise selbsttätig während des Einbaus der Flachdichtung zwischen den abzudichtenden Gegenflächen.

In einer bevorzugten Ausführungsform der Erfindung wird jedoch nicht nur der Vorsprung der ersten Dichtungslage, sondern auch der Vorsprung der zweiten Dichtungslage verformt, so dass bereits bei der Herstellung der Verbindung die Vorsprünge zwischen den zu verbindenden Dichtungslagen zentriert werden. Demnach wird also auch der wenigstens eine Vorsprung der zweiten Dichtungslage zumindest bereichsweise in Richtung auf die Ebene der ersten Dichtungslage hin verformt, bis zumindest ein Außenrandabschnitt des Vorsprungs in einer Ebene hinter einem benachbarten Außenrandabschnitt des Vorsprung der ersten Dichtungslage zu liegen kommt. In dem Fall, dass ein Vorsprung der ersten Dichtungslage und ein Vorsprung der zweiten Dichtungslage aufeinander zu und aneinander vorbeibewegt werden, ist es zweckmäßig, nicht lediglich einen, sondern beide der benachbarten Außenrandabschnitte der Vorsprünge zu verstemmen. Dies hat den Vorteil, dass zur Erzeugung einer Überlappung zwischen beiden Vorsprüngen aus dem Außenrandbereich eines jeden der Vorsprünge weniger Material in den späteren Überlappungsbereich herausgeformt werden muss als beim Verstemmen lediglich eines der Vorsprünge. Die Materialstärke in den herausgeformten Randbereichen kann deshalb größer sein, und die Verbindung ist stabiler. Im Hinblick auf die Herstellung der metallischen Flachdichtung ist das Herausbiegen des Vorsprungs aus seiner Ebene und anschließende Verstemmen ebenfalls von Vorteil, da beide Schritte mit ein und demselben Werkzeug durchgeführt werden können.

Beim erfindungsgemäßen Verfahren zum Verbinden mindestens zweier Dichtungslagen der metallischen Flachdichtung wird so vorgegangen, dass zunächst in die erste Dichtungslage in den Verbindungsbereich eine Durchgangsöffnung eingebracht wird, wobei der wenigstens eine in das Innere der Durchgangsöffnung ragende Vorsprung belassen wird. In die zweite Dichtungslage wird ebenfalls unter Belassung wenigstens eines in das Innere der Durchgangsöffnung ragenden Vorsprungs im Verbindungsbereich eine weitere Durchgangsöffnung eingebracht. Die Vorsprünge in beiden Dichtungslagen sind dabei so angeordnet, dass, wenn die erste Dichtungslage und die zweite Dichtungslage übereinander angeordnet werden, in einer Projektion des wenigstens einen Vorsprungs der zweiten Dichtungslage in die Ebene der ersten Dichtungslage, die Vorsprünge der ersten Dichtungslage nicht mit den Vorsprüngen der zweiten Dichtungslage überlappen. Anschließend werden erste und zweite Dichtungslage so übereinander angeordnet, dass die Vorsprünge einander nicht überlappen. Dann wird der wenigstens eine Vorsprung der ersten Dichtungslage zumindest bereichsweise aus deren Ebene heraus in Richtung auf die zweite Dichtungslage verformt, bis zumindest ein Außenrandabschnitt des Vorsprungs in einer Ebene hinter einem benachbarten Außenrandabschnitt eines Vorsprungs der zweiten Dichtungslage zu liegen kommt. Schließlich wird zumindest einer dieser benachbarten Außenrandabschnitte verstemmt, so dass der Vorsprung der ersten Dichtungslage den Vorsprung der zweiten Dichtungslage im Bereich der benachbarten Außenrandabschnitte hintergreift.

Wie schon bei der Beschreibung der metallischen Flachdichtung selbst erwähnt, können auch im erfindungsgemäßen Verfahren der wenigstens eine Vorsprung der ersten Dichtungslage und der wenigstens eine Vorsprung der zweiten Dichtungslage aufeinander zu und aneinander vorbei bewegt werden, bis zumindest einander benachbarte Außenrandabschnitte der Vorsprünge hintereinander zu liegen kommen.

Wie bereits ebenfalls im Hinblick auf die metallische Flachdichtung beschrieben, ist es grundsätzlich ausreichend, lediglich einen der benachbarten Außenrandabschnitte des Vorsprungs der ersten Dichtungslage oder des Vorsprungs der zweiten Dichtungslage zu verstemmen, damit eine Überlappung in diesem Bereich erzielt wird. Bevorzugt ist es jedoch, zur Erzeugung des Hinterschnitts sowohl einen Außenrandabschnitt des Vorsprungs der ersten Dichtungslage als auch einen Außenrandabschnitt des Vorsprungs der zweiten Dichtungslage zu verstemmen.

Das erfindungsgemäße Verfahren wird vorzugsweise mit einem Verstemmwerkzeug durchgeführt, welches zwei Werkzeugteile umfasst, von denen eines auf Seiten der ersten Dichtungslage und das zweite auf Seiten der zweiten Dichtungslage angeordnet wird. In an sich bekannter Weise sind in allen Bereichen der Werkzeugformoberfläche, die denjenigen Bereichen der Vorsprünge entsprechen, welche verstemmt werden sollen, über die Werkzeugformoberfläche vorstehende Stempel vorhanden. Beim Schließen der Werkzeugteile kommen diese Stempel auf einem jeweiligen Außenrandabschnitt eines Vorsprungs zu liegen und verformen diesen Außenrandabschnitt in Richtung auf die andere Dichtungslage hin. Im Verlauf des Schließvorgangs wird der herausgeformte Außenrandabschnitt schließlich zwischen Stempel des einen Werkzeugteils und Gegenfläche des anderen Werkzeugteils eingeklemmt. Ein weiteres Schließen der beiden Werkzeugteile führt dann dazu, dass sich das Material des eingeklemmten Außenrandabschnittes des Vorsprungs plastisch verformt. Hierbei wird das Material des Vorsprungs seitlich in einen dafür vorgesehenen Verdrängungsraum zwischen den beiden Werkzeugteilen herausgepresst. Dieser Verdrängungsraum ist so angeordnet, dass das in ihn hineingepresste Material einen Hinterschnitt zu einem Außenrandabschnitt eines benachbarten Vorsprungs der anderen Dichtungslage bildet.

Die Stempel im Verstemmwerkzeug können dabei in nur einem der Werkzeugteile, bevorzugt aber in beiden Werkzeugteilen angebracht sein. Sind die Stempel lediglich in einem der beiden Werkzeugteile angebracht, werden die Hinterschnittverbindungen zunächst so ausgebildet, dass die hinterschneidenden Bereiche über die Oberfläche einer der Dichtungslagen vorstehen. Um in diesem Fall die Hinterschnittverbindungen durch Verstemmen herstellen zu können, sind im nicht mit Stempeln versehenen Werkzeugteil entsprechende Vertiefungen vorgesehen, die Verdrängungsräume für das verstemmte Material bereitstellen. Wie bereits erwähnt, kann der in diesem Fall erzeugte Materialüberstand später durch Hineinformen des Materials in die Durchgangsöffnungen im Verbindungsbereich beseitigt werden. Um einen Materialüberstand über die Oberflächen der Dichtungslagen von vorne herein zu vermeiden, ist es jedoch bevorzugt, Stempel auf den Werkzeugformoberflächen beider Werkzeugteile vorzusehen, um sowohl die Vorsprünge der ersten Dichtungslage als auch die Vorsprünge der zweiten Dichtungslage zu verformen und die Hinterschnittverbindungen im Inneren der Durchgangsöffnungen im Verbindungsbereich herzustellen. Abgesehen von den vorstehend beschriebenen Besonderheiten entsprechen das im erfindungsgemäßen Verfahren verwendete Verstemmwerkzeug und die Durchführung des Verfahrens dem im Stand der Technik Üblichen.

Die erfindungsgemäße metallische Flachdichtung kann aus lediglich zwei Dichtungslagen bestehen, die auf die beschriebene Art und Weise miteinander verbunden sind. In der Dichtung können jedoch auch mehr als zwei Dichtungslagen vorhanden sein. Diese können entweder so miteinander verbunden werden, dass jeweils zwei Dichtungslagen wie beschrieben verbunden werden, wobei eine Dichtungslage jeweils an mindestens einer Verbindungsstelle mit der einen ihr benachbarten Dichtungslage und an wenigstens einer anderen Verbindungsstelle mit der anderen ihr benachbarten Dichtungslage verbunden ist, so dass insgesamt alle Dichtungslagen zu einem Verbund zusammengefügt werden. Es ist jedoch ebenfalls möglich, mehr als zwei Dichtungslagen über eine einzige Verbindungsstelle miteinander zu verbinden. Hierfür werden alle aufeinander angeordneten Dichtungslagen im Verbindungsbereich mit jeweils einer Durchgangsöffnung versehen. Die Vorsprünge, die der Verbindung der Dichtungslagen dienen, sind dabei in den außen angeordneten Dichtungslagen vorhanden. Die Verbindung erfolgt dann auf die eingangs beschrieben Weise, wobei die durch Hinterschnitt verbundenen Vorsprünge durch alle Durchgangsöffnungen der übereinander angeordneten Dichtungslagen hindurchreichen.

Um eine sichere Fixierung der Dichtungslagen aneinander zu gewährleisten, ist es zweckmäßig, mehrere Verbindungsbereiche auf den Dichtungslagen vorzusehen. Wenn es die Gesamtgröße der Dichtungslagen zulässt, sind mindestens drei Verbindungsbereiche auf den Dichtungslagen vorhanden.

Die Form der Durchgangsöffnungen im Verbindungsbereich sowie die Form der in die Durchgangsöffnungen hineinragenden Vorsprünge ist grundsätzlich beliebig. Bevorzugt sind die Vorsprünge lappen- oder zungenartig ausgebildet. Zweckmäßig werden die Durchgangsöffnungen und Vorsprünge nur so groß ausgebildet, wie notwendig ist, um eine stabile Verbindung der Dichtungslagen zu erzeugen. Anderenfalls würden die Verbindungsbereiche unnötig groß werden und damit mehr Platz als notwendig auf der Dichtungslage beanspruchen. Die im Hinterschnitt überlappenden Außenrandabschnitte der Vorsprünge erster und zweiter Dichtungslage können grundsätzlich in beliebigen Bereichen der Vorsprünge liegen, beispielsweise an einem seitlichen Rand der Vorsprünge oder im Bereich von deren Spitze, benachbart zum Inneren der Durchgangsöffnung. Eine weitere beispielhafte Geometriekombination für die Verbindung zweier Dichtungslagen sieht in der ersten Dichtungslage T-förmige Vorsprünge und in der zweiten Dichtungslage lappenförmige Vorsprünge vor. Idealerweise sind die offenen Abschnitte der Unterseite des T-Balkens zu der zur Mitte der Durchgangsöffnung zeigenden Seite eines lappenförmigen Vorsprungs benachbart. Die im Hinterschnitt überlappenden Außenrandabschnitte können hier wie in den vorgenannten Beispielen an den seitlichen Rändern der Vorsprünge liegen und/oder an der Unterseite des T-Balkens und der zur Mitte der Durchgangsöffnungen zeigenden Seite der lappenförmigen Vorsprünge.

In einer besonders einfachen Variante sind die Durchgangsöffnungen in den übereinander angeordneten Dichtungslagen beispielsweise rechteckig ausgebildet. Pro Durchgangsöffnung ist jeweils ein Vorsprung vorhanden, der jeweils nur einen Teilbereich der zugehörigen Durchgangsöffnung abdeckt. Dabei sind die Vorsprünge der übereinander angeordneten Dichtungslagen so gegeneinander versetzt, dass in Draufsicht auf eine der Dichtungslagen im Wesentlichen die gesamte Fläche der Durchgangsöffnungen abgedeckt wird. Zweckmäßig sind die Vorsprünge jeweils an der Schmalseite der Durchgangsöffnung mit ihrer zugehörigen Dichtungslage verbunden, während die übrigen Seiten des Vorsprungs von der Dichtungslage freigetrennt sind. Die Verbindung der beiden Vorsprünge erfolgt über die schmalseitigen Randbereiche im Inneren der Durchgangsöffnungen. Zur Herstellung der Verbindung wird wenigstens einer der Vorsprünge aus seiner Ebene heraus in Richtung auf den anderen Vorsprung hin verformt, bis seine Schmalseitenkante in einer Ebene hinter der Schmalseitenkante des anderen Vorsprungs zu liegen kommt. Vorzugsweise werden beide Vorsprünge aus ihrer Ebene herausgeformt, bis die schmalseitigen Kanten aneinander vorbei bewegt sind. Anschließend wird wenigstens einer dieser Kantenbereiche verstemmt, um so den Hinterschnitt im Bereich der schmalseitigen Kanten herzustellen.

Mit dieser einfachen Variante der Erfindung kann bereits eine gute Fixierung und Positionierung der Dichtungslagen zueinander erreicht werden, vor allen Dingen beim Anordnen mehrerer dieser Verbindungen im Bereich der Dichtungslagen. Eine besonders bevorzugte Positionierung und Fixierung der Dichtungslagen ergibt sich, wenn pro Durchgangsöffnung im Verbindungsbereich mehr als ein Vorsprung vorhanden ist. Besonders bevorzugt sind in Umfangsrichtung entlang des Randes einer Durchgangsöffnung mindestens drei und vorzugsweise vier Vorsprünge vorhanden. Zweckmäßig sind diese Vorsprünge in Umfangsrichtung im Wesentlichen gleichmäßig verteilt. Dabei sind dann die Vorsprünge der ersten Dichtungslage gegenüber den Vorsprüngen der zweiten Dichtungslage seitlich versetzt angeordnet. Wenn man also die Vorsprünge der einen Dichtungslage in die Ebene der Vorsprünge der anderen Dichtungslage projiziert, wechselt jeweils in Umfangsrichtung ein Vorsprung der einen Dichtungslage mit einem Vorsprung der anderen Dichtungslage ab, ohne dass sich die Vorsprünge vor dem Verstemmen überlappen. Ein Seitenrandabschnitt eines Vorsprung der ersten Dichtungslage kommt dabei benachbart zu einem Seitenrandabschnitt eines Vorsprungs der zweiten Dichtungslage zu liegen. Zweckmäßig ist dabei der Abstand zwischen den benachbarten Seitenrändern möglichst gering, damit beim Verstemmen nur relativ wenig Material aus den Seitenrandbereichen der Vorsprünge herausgepresst werden muss, um die Hinterschnittverbindung zu erzeugen. Bevorzugt ist die Anordnung der Vorsprünge von erster und zweiter Dichtungslage dabei derart, dass sich in der Projektion in eine Ebene ein geschlossener Ring ergibt. Vorzugsweise handelt es sich bei diesem Ring um einen Kreisring. Entsprechend besitzen die Vorsprünge am Rand der Durchgangsöffnung eine größere Breite als im Inneren der Öffnung.

Bei Anordnung mehrerer Vorsprünge pro Durchgangsöffnung können sowohl die Vorsprünge innerhalb einer Öffnung derselben Dichtungslage als auch die Vorsprünge in den unterschiedlichen Dichtungslagen verschieden geformt sein. Aus Gründen der leichteren Herstellbarkeit ist es jedoch bevorzugt, wenn sämtliche Vorsprünge dieselbe Form und Größe aufweisen. Dies bedeutet, dass die Bereiche in der ersten Durchgangsöffnung, in denen die Vorsprünge der zweiten Dichtungslage zu liegen kommen, im Wesentlichen die gleiche Form aufweisen müssen wie die Vorsprünge selbst. Die Randkonturen der Durchgangsöffnung der ersten Dichtungslage und der Durchgangsöffnung der zweiten Dichtungslage mit den jeweils in sie hineinragenden Vorsprüngen entsprechen einander also bevorzugt. Unterschiedlich ist lediglich die Anordnung in der jeweiligen Dichtungslage. Die Durchgangsöffnungen mit den in sie hineinragenden Vorsprüngen sind derart gegeneinander verdreht, dass ein Vorsprung der ersten Dichtungslage über einem entsprechenden Rücksprung der zweiten Dichtungslage zu liegen kommt. Eine solche Anordnung hat den Vorteil, dass zum Einbringen der Durchgangsöffnungen jeweils nur ein einziges Werkzeug verwendet werden muss. Wechselt man von der Herstellung der ersten Dichtungslagen zur Herstellung der zweiten Dichtungslagen, muss jeweils nur die Orientierung von Werkzeug zu Dichtungslage geändert werden. Zweckmäßig werden die Durchgangsöffnungen eingestanzt, was gegebenenfalls auch im selben Schritt wie das Einstanzen weiterer Öffnungen in die Dichtungslagen erfolgen kann. Der Schritt des Einbringens der Durchgangsöffnungen lässt sich damit - ebenso wie die weiteren Schritte bei der Herstellung der Lagenverbindungen - in einfacher und günstiger Weise in die üblichen Herstellungsschritte einer metallischen Flachdichtung integrieren.

Das erfindungsgemäße Verfahren zum Verbinden mindestens zweier Dichtungslagen einer metallischen Flachdichtung eignet sich zudem für eine Vielzahl unterschiedlicher Flachdichtungen. Eine Abänderung der Außenkonturen der Dichtungslagen wie das Anbringen von Verbindungslaschen ist dabei nicht erforderlich, da die Lagenverbindungen im Pressungsbereich der Dichtung angeordnet werden können. Zudem können auch beschichtete Dichtungslagen verarbeitet werden, da - anders als im Fall einer Schweißverbindung - eine nichtleitende Beschichtung der Dichtungslage beim erfindungsgemäßen Verfahren in keiner Weise stört. Beispiele von Flachdichtungen sind Zylinderkopfdichtungen, Krümmerdichtungen oder sonstige Flanschdichtungen, wie sie insbesondere im Bereich von Verbrennungsmotoren eingesetzt werden.

Die Erfindung soll nachfolgend anhand von Zeichnungen näher erläutert werden. Die Zeichnungen sind lediglich schematisch und dienen ausschließlich der Erläuterung einiger bevorzugter Ausführungsbeispiele und Verfahrensvarianten, ohne dass die Erfindung auf diese beschränkt wäre. In den Zeichnungen, in denen gleiche Bezugszeichen gleiche Teile bezeichnen, zeigen:
- Fig. 1 (a): eine Teildraufsicht auf eine erste Dichtungslage einer Vorstufe einer erfindungsgemäßen metallischen Flachdichtung;
- Fig. 1 (b): einen Querschnitt durch die Dichtungslage gemäß Fig. 1 (a) entlang der Linie A-A;
- Fig. 2(a): eine Teildraufsicht auf eine zweite Dichtungslage einer Vorstufe einer erfindungsgemäßen metallischen Flachdichtung;
- Fig. 2(b): einen Querschnitt durch die zweite Dichtungslage entlang der Linie A-A in Fig. 2(a);
- Fig. 3(a): eine Teildraufsicht auf die übereinander angeordneten ersten und zweiten Dichtungslagen gemäß Fig. 1 (a) und 2(a) als weitere Vorstufe einer erfindungsgemäßen metallischen Flachdichtung;
- Fig. 3(b): einen Querschnitt durch die Vorstufe gemäß Fig. 3(a) entlang der Linie A-A;
- Fig. 4(a): eine Teildraufsicht auf eine erfindungsgemäße metallische Flachdichtung;
- Fig. 4(b): einen Teilquerschnitt durch die metallische Flachdichtung gemäß Fig. 4(a) entlang der Linie A-A und
- Fig. 5: eine Vorstufe einer erfindungsgemäßen metallischen Flachdichtung während ihrer Herstellung, angeordnet in einem Verstemmwerkzeug.

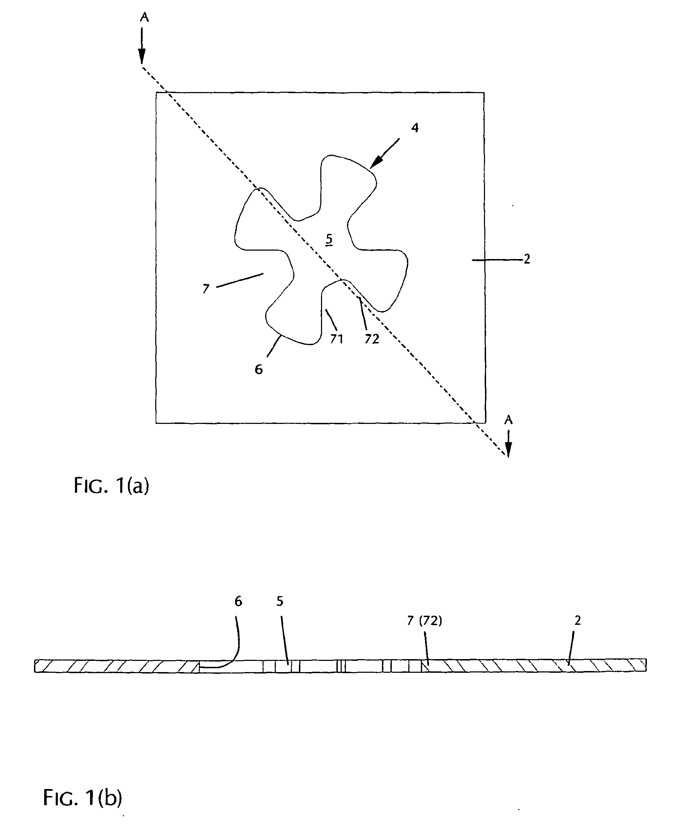

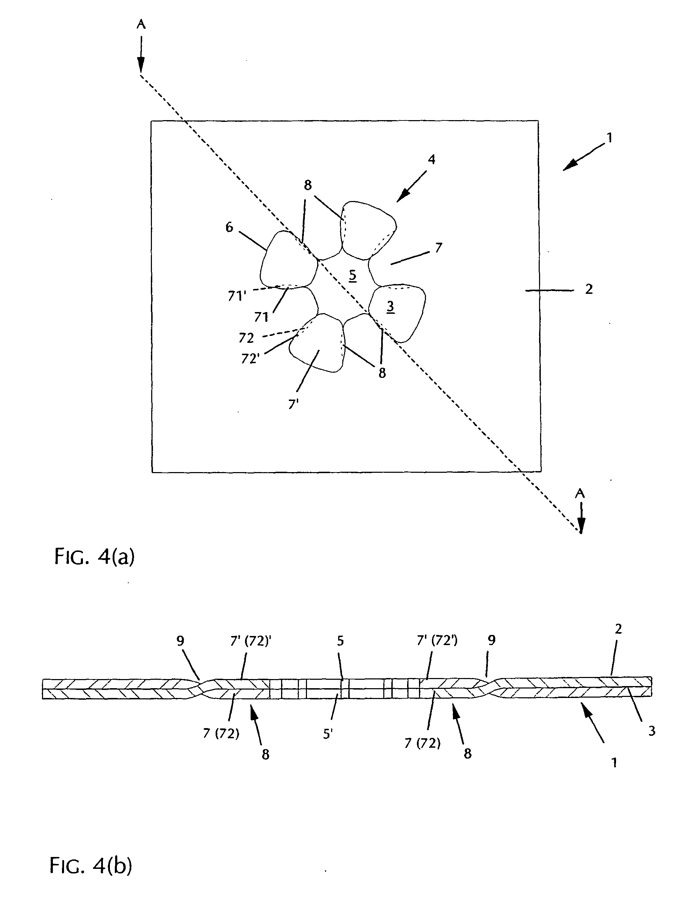

Fig. 1(a) bis 3(b) zeigen verschiedene Vorstufen auf dem Weg zu einer erfindungsgemäßen metallischen Flachdichtung 1, wie sie in Fig. 4(a) und 4(b) dargestellt ist. Gezeigt ist jeweils die Teildarstellung um einen Verbindungsbereich 4, in dem die verschiedenen Dichtungslagen 2 und 3 der metallischen Flachdichtung 1 miteinander verbunden werden.

Fig. 1(a) und 1(b) zeigen eine Vorstufe der ersten Dichtungslage 2. Das Material der Dichtungslage 2 ist beispielsweise Edelstahl. Im Pressungsbereich der Dichtungslage 2, also in einem Bereich, welcher im eingebauten Zustand der fertigen metallischen Flachdichtung 1 zwischen den abzudichtenden Gegenflächen zu liegen kommt, ist eine Öffnung 5 eingebracht, beispielsweise eingestanzt. Über den Rand 6, der grundsätzlich ohne die Vorsprünge 7 einen im Wesentlichen kreisförmigen Verlauf hätte, stehen in Umfangsrichtung um die Öffnung 5 vier Vorsprünge 7 vor. Die Vorsprünge 7 sind zungenartig ausgebildet und verjüngen sich zum Inneren der Öffnung 5 hin. Die Vorsprünge 7 sind gleichmäßig in Umfangsrichtung um die Öffnung 5 herum verteilt und entsprechend jeweils um einen Winkel von 90 ° zueinander versetzt.

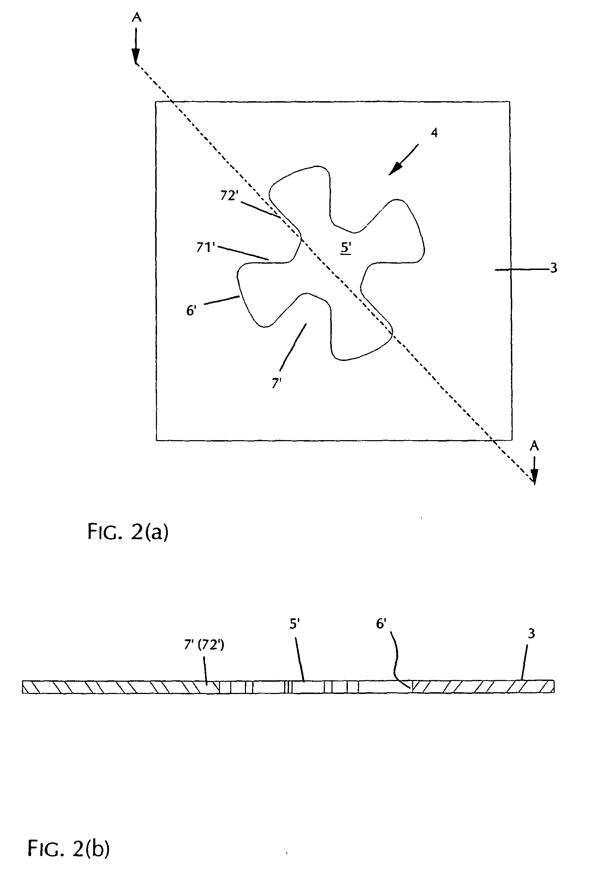

Fig. 2(a) und 2(b) zeigen einen Ausschnitt einer zweiten Dichtungslage 3 als weiterer Vorstufe der erfindungsgemäßen Flachdichtung 1. Gezeigt ist jeweils der gleiche Ausschnitt wie in Fig. 1 (a) und 1(b). Durchgangsöffnung 5' und Vorsprünge 7' sowie der Randverlauf 6' der Durchgangsöffnung 5' entsprechen im Wesentlichen demjenigen der Dichtungslage 2. Im Unterschied zu dieser ist jedoch die Durchgangsöffnung 5' mit den Vorsprüngen 7' gegenüber der Öffnung 5 und den Vorsprüngen 7 der Dichtungslage 2 um 45 ° verdreht.

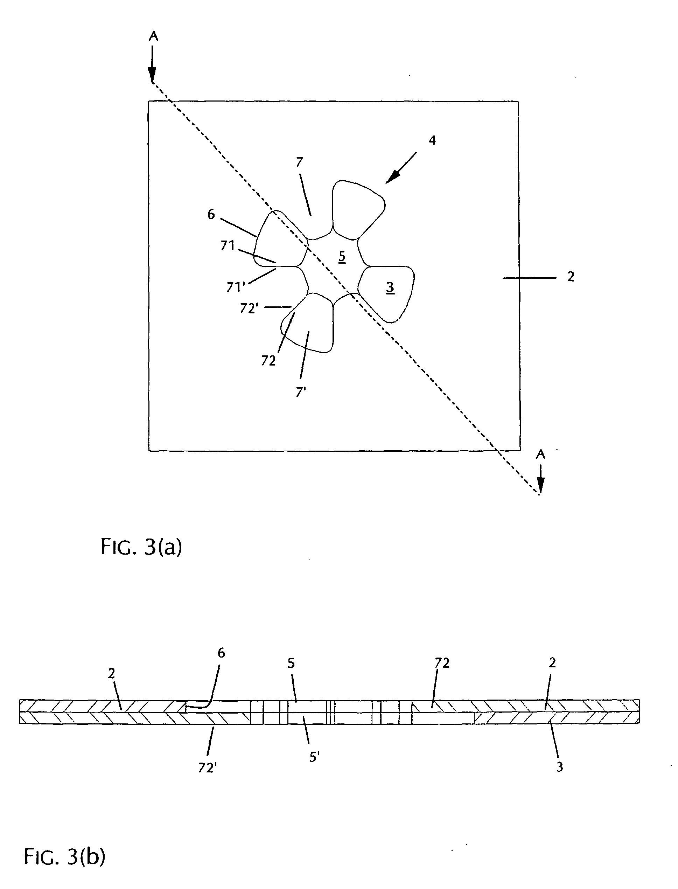

Wenn die Dichtungslage 2 über der Dichtungslage 3 angeordnet wird, wie dies in Fig. 3(a) und Fig. 3(b) dargestellt ist, führt dies dazu, dass die Vorsprünge 7 über den Rücksprüngen der Öffnung 5' zu liegen kommen und die Vorsprünge 7' der Dichtungslage 3 in einem Bereich unterhalb der Rücksprünge in der Öffnung 5 der Dichtungslage 2 angeordnet sind. Entsprechend kommt jeweils ein Außenrandabschnitt 71 der Vorsprünge 7 der Dichtungslage 2 neben einem Außenrandabschnitt 71' der Vorsprünge 7' der Dichtungslage 3 zu liegen und ein Seitenrandabschnitt 72 der Dichtungslage 2 neben einem Seitenrandabschnitt 72' der Dichtungslage 3. Fig. 3(a) und 3(b) zeigen eine Vorstufe der erfindungsgemäßen Flachdichtung, in der die Dichtungslagen 2 und 3 noch nicht miteinander verbunden sind.

Um diese Verbindung herzustellen, werden nun die Seitenrandabschnitte 71 und 72 der Vorsprünge 7 der Dichtungslage 2 in Richtung auf die Dichtungslage 3 hin verformt. Gleichfalls werden die Seitenrandabschnitte 71' und 72' der Dichtungslage 3 in umgekehrter Richtung auf die Dichtungslage 2 hin gebogen. Die Verformung der Seitenrandabschnitte erfolgt soweit, bis die Seitenrandabschnitte 71 und 72 in einer Ebene hinter den Seitenrandabschnitten 71' und 72' der Dichtungslage 3 zu liegen kommen und umgekehrt. Auch in diesem Zwischenstadium sind die beiden Dichtungslagen 2 und 3 immer noch nicht miteinander verbunden. Die Verbindung der beiden Dichtungslagen erfolgt dadurch, dass die Seitenrandabschnitte 71, 72, 71' und 72' nun verstemmt werden. Dadurch fließt Material der Seitenrandabschnitte seitlich über die Ränder der Vorsprünge 7 bzw. 7' hinaus. Dies ist in Fig. 4(a) daran zu erkennen, dass der Verlauf der Seitenrandabschnitte nun nicht mehr, wie in den vorangegangenen Figuren, gradlinig ist, sondern die Seitenrandabschnitte 71 und 72 der Vorsprünge 7 sowie 71' und 72' der Vorsprünge 7' gekrümmt nach außen ausgestellt sind. Durch diese Verbreiterung der Vorsprünge 7 und 7' nach außen kommt es in den Bereichen 8 jeweils zu einer Überlappung der Vorsprünge. In diesen Überlappungsbereichen 8 ergibt sich damit eine Hinterschneidung der einen Dichtungslage durch die andere, wie in Fig. 4(b) am besten zu erkennen ist. Durch das Herausbiegen der hier dargestellten Außenrandbereiche 72 und 72' aus ihrer jeweiligen Ebene kommt es in den Bereichen 9 jeweils zu einer Überkreuzung der beiden Dichtungslagen 2, 3, so dass in den Überlappungsbereichen 8 nun jeweils die zweite Dichtungslage 3 über der ersten Dichtungslage 2 liegt. In den Überlappungsbereichen 8 hinterschneidet daher die Dichtungslage 2 die Dichtungslage 3, so dass beide Dichtungslagen miteinander verklammert werden. Insgesamt bilden die Vorsprünge 7 und 7' einen ringförmigen Bereich um die nun verkleinerten Durchgangsöffnungen 5 und 5' mit insgesamt acht Hinterschneidungsbereichen 8, in denen die beiden Dichtungslagen 2 und 3 miteinander verbunden sind. Anzahl und Anordnung dieser Hinterschneidungsbereiche sorgen einerseits für eine sehr sichere Befestigung der Dichtungslagen 2 und 3 aneinander und außerdem für eine ortsfeste Fixierung beider Dichtungslagen zueinander.

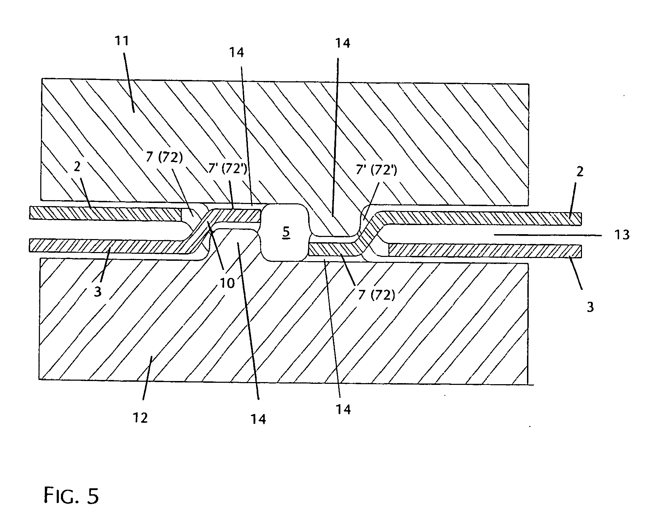

Fig. 5 zeigt ein Verstemmwerkzeug, wie es im erfindungsgemäßen Verfahren zum Verbinden von Dichtungslagen einer metallischen Flachdichtung eingesetzt werden kann. Dargestellt ist ein Teilquerschnitt durch das Werkzeug mit einer eingelegten Vorform einer metallischen Flachdichtung im Teilquerschnitt in einem Verbindungsbereich der Dichtung. Der Querschnitt folgt erneut der Linie A-A in Fig. 3(a), wobei die Dichtungsvorform aber in einem späteren Verarbeitungsstadium gezeigt ist. Die Vorform der Flachdichtung mit den beiden Dichtungslagen 2 und 3 ist in einen Hohlraum 13 zwischen zwei Werkzeugteilen 11 und 12 eingelegt und in einem Zustand unmittelbar vor dem Verstemmen benachbarter Vorsprünge 7 und 7' gezeigt. Die Vorsprünge 7 und 7' oder genauer ihre Außenrandbereiche 72 und 72' sind jeweils bereits aus der Ebene ihrer zugehörigen Dichtungslage 2 bzw. 3 in die Ebene der jeweils anderen Dichtungslage herausgebogen. Durch das Herausbiegen entsteht jeweils eine Kröpfung 10. Das Herausformen der Außenrandbereiche 72 und 72' erfolgt mit Hilfe von Stempeln 14, die über die Werkzeugformoberflächen der Werkzeugteile 11 und 12 vorstehen. Fig. 5 zeigt die Situation im erfindungsgemäßen Verfahren, bei der die Außenrandabschnitte 72 und 72' im Wesentlichen vollständig aus den Ebenen ihrer Dichtungslagen herausgebogen sind, aber noch kein Verstemmen erfolgt ist.

Zum Verstemmen der Außenrandabschnitte 72 und 72' werden die beiden Werkzeugteile 11 und 12 weiter aufeinander zu bewegt. Dabei drücken sich die Stempel 14 zunehmend in das Material der Außenrandabschnitte 72 und 72' ein und drücken dieses seitlich in Richtung auf die jeweils benachbarten Außenrandabschnitte der in Umfangsrichtung um die Öffnung 5 benachbarten Vorsprünge der anderen Dichtungslage. Zwei dieser benachbarten Vorsprünge sind in Blickrichtung hinter den schraffiert dargestellten Außenrandabschnitten 72 und 72' der Querschnittsebene mit ihren Außenkonturen angedeutet, ebenso zwei weitere Stempel 14. Zwischen den in der Figur hintereinander liegenden, also in Umfangsrichtung benachbarten, Stempeln ist jeweils ein Verdrängungsraum definiert. In diese Verdrängungsräume wird das verstemmte Material der Außenrandabschnitte 72 und 72' gepresst, bis die nach außen herausgepressten Außenrandbereiche 72 und 72' der Vorsprünge 7 und 7' schließlich überlappen und eine Hinterschnittverbindung bilden. Stempel 14 sind selbstverständlich auch über den Außenrandabschnitten 71 und 71' vorhanden, in dieser Schnittdarstellung aber nicht zu sehen. Die Verdrängungsräume entsprechen den späteren Überlappungsbereichen 8 der Vorsprünge 7 und 7'.

Im vollständig geschlossenen Zustand der beiden Werkzeugteile 11 und 12 entspricht die Höhe des Spaltes 13 zwischen den Werkzeugteilen der Dicke der fertigen metallischen Flachdichtung 1. Während der Verformungs- und Verstemmschritte liegen die Dichtungslagen 2 und 3 natürlich an den Werkzeugformoberflächen an. Zur besseren Erkennbarkeit wurden zwischen diesen Teilen hier jedoch Abstände eingezeichnet. Durch die, abgesehen von den Stempeln 14, plane Formgebung der Werkzeugteiloberflächen schließen die Oberflächen der Außenrandabschnitte 72 und 72' bündig mit den Oberflächen der Dichtungslagen 2 bzw. 3 ab, so dass im Bereich der Verbindung der beiden Dichtungslagen 2 und 3 kein Materialauftrag erzeugt wird. Dies ermöglicht die Verwendung der Verbindungen auch im Pressungsbereich der Dichtung.

## Patentansprüche

1. Metallische Flachdichtung (1) mit wenigstens zwei übereinander angeordneten Dichtungslagen (2, 3), die innerhalb wenigstens eines Verbindungsbereiches (4) miteinander verbunden sind, wobei im Verbindungsbereich (4) jeder der beiden Dichtungslagen (2, 3) eine Durchgangsöffnung (5, 5') vorhanden ist, von deren Rand (6, 6') jeweils wenigstens ein mit der jeweiligen Dichtungslage (2, 3) verbundener Vorsprung (7, 7') ins Innere der Durchgangsöffnung (5, 5') hineinragt, **dadurch gekennzeichnet, dass** die Verbindung zwischen den beiden Dichtungslagen (2, 3) im Verbindungsbereich (4) dadurch erhältlich ist, dass
A) der wenigstens eine Vorsprung (7) der ersten Dichtungslage (2), welcher so ausgebildet ist, dass er, in der Projektion in die Ebene der zweiten Dichtungslage (3), mit dem wenigstens eine Vorsprung (7') der zweiten Dichtungslage (3) nicht überlappt, zumindest bereichsweise aus der Ebene der ersten Dichtungslage (2) heraus in Richtung auf die zweite Dichtungslage (3) hin verformt wird, bis zumindest ein Außenrandabschnitt (71, 72) des Vorsprungs (7) in einer Ebene hinter einem benachbarten Außenrandabschnitt (71', 72') eines Vorsprungs (7') der zweiten Dichtungslage (3) zu liegen kommt, und anschließend
B) zumindest einer der benachbarten Außenrandabschnitte (71, 71', 72, 72') verstemmt wird, so dass der Vorsprung (7) der ersten Dichtungslage (2) den Vorsprung (7') der zweiten Dichtungslage (3) im Bereich der benachbarten Außenrandabschnitte (71, 71', 72, 72') hintergreift.

2. Metallische Flachdichtung nach Anspruch 1, wobei in Schritt A) der Vorsprung (7') der zweiten Dichtungslage (3) zusätzlich in Richtung auf die Ebene der ersten Dichtungslage (2) hin verformt wird, bis zumindest ein Außenrandabschnitt (71', 72') des Vorsprungs (7') in einer Ebene hinter einem benachbarten Außenrandabschnitt (71, 72) des Vorsprungs (7) der ersten Dichtungslage (2) zu liegen kommt.

3. Metallische Flachdichtung nach Anspruch 1 oder 2, worin der wenigstens eine Vorsprung (7, 7') zungenartig ausgebildet ist.

4. Metallische Flachdichtung nach einem der Ansprüche 1 bis 3, worin mehrere Vorsprünge (7, 7') in Umfangsrichtung entlang des Randes (6, 6') der Durchgangsöffnung (5, 5') vorhanden sind, insbesondere mindestens drei und vorzugsweise vier Vorsprünge (7, 7').

5. Metallische Flachdichtung nach Anspruch 4, worin die Vorsprünge (7) der ersten Dichtungslage (2) seitlich gegenüber den Vorsprüngen (7') der zweiten Dichtungslage (3) versetzt angeordnet sind, so dass, in der Projektion der Vorsprünge einer Dichtungslage in die Ebene der Vorsprünge der anderen Dichtungslage, jeweils ein Seitenrandabschnitt (71, 72) eines Vorsprungs der ersten Dichtungslage (2) benachbart zu einem Seitenrandabschnitt (71', 72') eines Vorsprungs der zweiten Dichtungslage (3) zu liegen kommt.

6. Metallische Flachdichtung nach Anspruch 5,
**dadurch gekennzeichnet,**
**dass** die Anordnung der Vorsprünge (7, 7') von erster und zweiter Dichtungslage (2, 3) einen geschlossenen Ring, insbesondere einen Kreisring, ergibt.

7. Metallische Flachdichtung nach einem der vorhergehenden Ansprüche, worin die Randkonturen der Durchgangsöffnung (5) der ersten Dichtungslage (2) und der Durchgangsöffnung (5') der zweiten Dichtungslage (3) mit den jeweils in sie hineinragenden Vorsprüngen (7, 7') einander entsprechen, aber gegeneinander in ihrer Anordnung in der jeweiligen Dichtungslage verdreht sind, so dass ein Vorsprung (7) der ersten Dichtungslage (2) jeweils über einem Rücksprung der zweiten Dichtungslage (3) zu liegen kommt.

8. Verfahren zum Verbinden mindestens zweier Dichtungslagen einer metallischen Flachdichtung nach einem der Ansprüche 1 bis 7, umfassend die Schritte:
a) Einbringen einer Durchgangsöffnung (5) in einen Verbindungsbereich (4) der ersten Dichtungslage (2) unter Belassung wenigstens eines in das Innere der Durchgangsöffnung (5) ragenden Vorsprungs (7),
b) Einbringen einer Durchgangsöffnung (5) in einen Verbindungsbereich (4) der zweiten Dichtungslage (3) unter Belassung wenigstens eines in das Innere der Durchgangsöffnung (5') ragenden Vorsprungs (7') derart, dass der wenigstens eine Vorsprung (7'), wenn die erste Dichtungslage (2) und die zweite Dichtungslage (3) übereinander angeordnet werden, in einer Projektion des wenigstens einen Vorsprungs (7') in die Ebene der ersten Dichtungslage (2), nicht mit dem wenigstens einen Vorsprung (7) der ersten Dichtungslage (2) überlappt,
c) Übereinanderanordnen von erster und zweiter Dichtungslage (2, 3), so dass die Vorsprünge (7, 7') einander nicht überlappen,
d) Herausformen des wenigstens einen Vorsprungs (7) der ersten Dichtungslage (2) zumindest bereichsweise aus der Ebene der ersten Dichtungslage (2) in Richtung auf die zweite Dichtungslage (3), bis zumindest ein Außenrandabschnitt (71, 72) des Vorsprungs (7) in einer Ebene hinter einem benachbarten Außenrandabschnitt (71', 72') eines Vorsprungs (7') der zweiten Dichtungslage (3) zu liegen kommt, und
e) Verstemmen zumindest eines der benachbarten Außenrandabschnitte (71, 71', 72, 72'), so dass der Vorsprung (7) der ersten Dichtungslage (2) den Vorsprung (7') der zweiten Dichtungslage (3) im Bereich der benachbarten Außenrandabschnitte (71, 71', 72, 72') hintergreift.

9. Verfahren nach Anspruch 8, worin die Schritte d) und e) mit einem Verstemmwerkzeug durchgeführt werden, welches zwei Werkzeugteile (11, 12) umfasst, von denen eines (11) auf Seiten der ersten Dichtungslage (2) und das zweite (12) auf Seiten der zweiten Dichtungslage (3) angeordnet wird und wobei zumindest das erste Werkzeugteil (11) wenigstens einen über die Werkzeugformoberfläche vorstehenden Stempel (14) aufweist, welcher beim Schließen der Werkzeugteile (11, 12) auf einem Außenrandabschnitt (71, 72) eines Vorsprungs (7) der ersten Dichtungslage (2) zu liegen kommt, diesen Außenrandabschnitt (71, 72) beim weiteren Schließen der Werkzeugteile (11, 12) in Richtung auf die zweite Dichtungslage (3) hin verformt und schließlich den Außenrandabschnitt (71, 72) so verstemmt, dass Material aus dem Außenrandabschnitt (71, 72) seitlich in einen Verdrängungsraum hinter einem benachbarten Außenrandabschnitt (71', 72') der zweiten Dichtungslage (3) verdrängt wird, so dass der Vorsprung (7) der ersten Dichtungslage (2) den Vorsprung (7') der zweiten Dichtungslage (3) im Bereich der benachbarten Außenrandabschnitte (71, 71', 72, 72') hintergreift.

10. Verfahren nach Anspruch 9, worin dass zweite Werkzeugteil (12) wenigstens einen über die Werkzeugformoberfläche vorstehenden Stempel (14) aufweist, welcher auf einem Außenrandabschnitt (71', 72') eines Vorsprungs (7') der zweiten Dichtungslage (3) zu liegen kommt, diesen Außenrandabschnitt (71', 72') beim weiteren Schließen der Werkzeugteile (11, 12) in Richtung auf die erste Dichtungslage (2) hin verformt und schließlich den Außenrandabschnitt (71', 72') so verstemmt, dass Material aus dem Außenrandabschnitt (71', 72') seitlich in einen Verdrängungsraum hinter einem benachbarten Außenrandabschnitt (71, 72) der ersten Dichtungslage (2) verdrängt wird, so dass der Vorsprung (7') der zweiten Dichtungslage (3) den Vorsprung (7) der ersten Dichtungslage (2) im Bereich der benachbarten Außenrandabschnitte (71, 71', 72, 72') hintergreift.

## Claims

1. A metallic flat gasket (1) having at least two superimposed gasket layers (2, 3) which are connected to each other within at least one connecting area (4), with a through opening (5, 5') being provided in the connecting area (4) of each of the two gasket layers (2, 3), with at least one projection (7, 7') in each case extending from a margin (6, 6') of the through opening (5, 5') into its interior, the projection being connected to the respective gasket layer (2, 3), **characterized in that** the connection between the two gasket layers (2, 3) in the connecting area (4) is obtainable by
A) the at least one projection (7) of the first gasket layer (2), which is designed in a manner so as not to overlap with the at least one projection (7') of the second gasket layer (3) in a projection into the plane of the second gasket layer (3), being deformed at least partly out of the plane of the first gasket layer (2) in a direction towards the second gasket layer (3) until at least one outer margin portion (71, 72) of the projection (7) comes to lie in a plane behind an adjacent outer margin portion (71', 72') of the second gasket layer (3), and subsequently by
B) at least one of the adjacent outer margin portions (71, 71', 72, 72') being calked so that the projection (7) of the first gasket layer (2) grasps behind the projection (7') of the second gasket layer (3) within the area of the adjacent outer margin portions (71, 71', 72, 72').

2. A metallic flat gasket according to claim 1, wherein in step A) the projection (7') of the second gasket layer (3) is deformed additionally in the direction towards the plane of the first gasket layer (2) until at least one outer margin portion (71', 72') of the projection (7') comes to lie in a plane behind an adjacent outer margin portion (71, 72) of the projection (7) of the first gasket layer (2).

3. A metallic flat gasket according to claim 1 or 2, wherein the at least one projection (7, 7') is provided with a tongue-like configuration.

4. A metallic flat gasket according to any of the claims 1 to 3, wherein several projections (7, 7') are present in the circumferential direction along the edge (6, 6') of the through opening (5, 5'), especially at least three and preferably four projections (7, 7').

5. A metallic flat gasket according to claim 4, wherein the projections (7) of the first gasket layers (2) are arranged laterally offset relative to the projections (7') of the second gasket layer (3), so that, in the projection of the projections of one gasket layer into the plane of the projections of the other gasket layer, one lateral margin portion (71, 72) each of a projection of the first gasket layer (2) comes to lie adjacent to a lateral margin portion (71', 72') of a projection of the second gasket layer (3).

6. A metallic flat gasket according to claim 5, **characterized in that** the arrangement of the projections (7, 7') of first and second gasket layer (2, 3) leads to a closed ring, especially a circular ring.

7. A metallic flat gasket according to any of the preceding claims, wherein the shapes of the edges of the through openings (5) of the first gasket layer (2) and the through opening (5') of the second gasket layer (3) correspond respectively to the projections (7, 7') projecting into the same, but are turned with respect to one another in their arrangement in the respective gasket layer, so that one projection (7) of the first gasket layer (2) comes to lie above a set-off of the second gasket layer (3).

8. A process for connecting at least two gasket layers of a metal flat gasket according to any one of claims 1 to 7, comprising the steps of
a) placing a through opening (5) in a connecting area (4) of the first gasket layer (2), leaving at least one projection (7) extending into the interior of the through opening (5),
b) placing a through opening (5) in a connecting area (4) of the second gasket layer (3), leaving at least one projection (7') extending into the interior of through opening (5') in a manner that the at least one projection (7'), in a projection of the at least one projection (7') in the plane of the first gasket layer (2), does not overlap with the at least one projection (7) of the first gasket layer (2) when the first gasket layer (2) and the second gasket layer (3) are placed on top of each other,
c) placing the first and second gasket layers (2, 3) on top of each other so that the projections (7, 7') do not overlap each other,
d) forming the at least one projection (7) of the first gasket layer (2) at least partly out of the plane of the first gasket layer (2) in the direction towards the second gasket layer (3) until at least one outer margin portion (71, 72) of the projection (7) comes to lie in a plane behind an adjacent outer margin portion (71', 72') of a projection (7') of the second gasket layer (3), and
e) calking at least one of the adjacent outer margin portions (71, 71', 72, 72') so that the projection (7) of the first gasket layer (2) grasps behind the projection (7') of the second gasket layer(3) in the area of the adjacent outer margin portions (71, 71', 72, 72').

9. A process according to claim 8, wherein the steps d) and e) are carried out with a calking tool, comprising two tool parts (11, 12), of which one (11) is arranged on the side of the first gasket layer (2) and the second (12) on the side of the second gasket layer (3) and with at least the first tool part (11) comprising at least one stamp (14) which extends beyond the tool forming surface and which upon closing of the tool parts (11, 12) comes to lie on an outer margin portion (71, 72) of a projection (7) of the first gasket layer (2), deforms said outer margin portion (71, 72) in the further closure of the tool parts (11, 12) in the direction towards the second gasket layer (3) and finally calks the outer margin portion (71, 72) in such a way that material from the outer margin portion (71, 72) is displaced laterally into a displacement chamber behind an adjacent outer margin portion (71', 72') of the second gasket layer (3), so that the projection (7) of the first gasket layer (2) grasps behind the projection (7') of the second gasket layer (3) in the area of the adjacent outer margin portions (71, 71', 72, 72').

10. The process according to claim 9, wherein the second tool part (12) comprises at least one stamp (14) which extends beyond the tool forming surface and which comes to lie on an outer margin portion (71', 72') of a projection (7') of the second gasket layer (3), deforms said outer margin portion (71', 72') in the further closure of the tool parts (11, 12) in the direction towards the first gasket layer (2) and finally calks the outer margin portion (71', 72') in such a way that material from the outer margin portion (71', 72') is displaced laterally into a displacement chamber behind an adjacent outer margin portion (71, 72) of the first gasket layer (2), so that the projection (7') of the second gasket layer (3) grasps behind the projection (7) of the first gasket layer (2) in the area of the adjacent outer margin portions (71, 71', 72, 72').

## Revendications

1. Joint plat métallique (1) avec au moins deux couches d'étanchéité (2, 3) superposées qui sont reliées entre elles dans au moins une zone de liaison (4), une ouverture de passage (5, 5') étant prévue dans la zone de liaison (4) de chacune des couches d'étanchéité (2, 3), dont le bord (6, 6') porte au moins une saillie (7, 7') reliée à la couche d'étanchéité (2, 3) correspondante et qui dépasse à l'intérieur de l'ouverture de passage (5, 5'), **caractérisé en ce que** l'assemblage entre les deux couches d'étanchéité (2, 3) dans la zone de liaison (4) est obtenu par le fait que
A) l'au moins une saillie (7) de la première couche d'étanchéité (2), qui est conformée de telle sorte qu'en projection dans le plan de la deuxième couche d'étanchéité (3), elle ne chevauche pas l'au moins une saillie (7') de la deuxième couche d'étanchéité (3), est déformée au moins par zones hors du plan de la première couche d'étanchéité (2) en direction de la deuxième couche d'étanchéité (3) jusqu'à ce qu'au moins une partie de bord extérieur (71, 72) de la saillie (7) se trouve dans un plan situé derrière une partie de bord extérieur (71', 72') voisine d'une saillie (7') de la deuxième couche d'étanchéité (3),
et qu'ensuite
B) au moins une des parties de bord extérieur (71, 71', 72, 72') voisine est rabattue de telle sorte que la saillie (7) de la première couche d'étanchéité (2) passe derrière la saillie (7') de la deuxième couche d'étanchéité (3) au niveau des parties de bord extérieur (71, 71', 72, 72') voisines.

2. Joint plat métallique selon la revendication 1, dans lequel, dans l'étape A), la saillie (7') de la deuxième couche d'étanchéité (3) est en outre déformée en direction du plan de la première couche d'étanchéité (2) jusqu'à ce qu'au moins une partie de bord extérieur (71', 72') de la saillie (7') se trouve dans un plan situé derrière une partie de bord extérieur (71, 72) voisine de la saillie (7) de la première couche d'étanchéité (2).

3. Joint plat métallique selon la revendication 1 ou 2, dans lequel l'au moins une saillie (7, 7') est en forme de languette.

4. Joint plat métallique selon l'une des revendications 1 à 3, dans lequel plusieurs saillies (7, 7') sont prévues dans le sens de la circonférence le long du bord (6, 6') de l'ouverture de passage (5, 5'), en particulier trois et de préférence quatre saillies (7, 7').

5. Joint plat métallique selon la revendication 4, dans lequel les saillies (7) de la première couche d'étanchéité (2) sont décalées latéralement par rapport aux saillies (7') de la deuxième couche d'étanchéité (3), de sorte que dans une projection des saillies d'une couche d'étanchéité dans le plan des saillies de l'autre couche d'étanchéité, une partie de bord latéral (71, 72) d'une saillie de la première couche d'étanchéité (2) se trouve voisine d'une partie de bord latéral (71', 72') d'une saillie de la deuxième couche d'étanchéité (3).

6. Joint plat métallique selon la revendication 5, **caractérisé en ce que** la disposition des saillies (7, 7') des première et deuxième couches d'étanchéité (2, 3) donne un anneau fermé, de préférence un anneau circulaire.

7. Joint plat métallique selon l'une des revendications précédentes, dans lequel les contours de bord de l'ouverture de passage (5) de la première couche d'étanchéité (2) et de l'ouverture de passage (5') de la deuxième couche d'étanchéité (3) avec les saillies (7, 7') qui dépassent à l'intérieur correspondent l'un à l'autre mais sont décalés en rotation l'un par rapport à l'autre dans leur disposition dans chaque couche d'étanchéité, de sorte qu'une saillie (7) de la première couche d'étanchéité (2) repose sur une saillie arrière de la deuxième couche d'étanchéité (3).

8. Procédé pour assembler deux couches d'étanchéité d'un joint plat métallique selon l'une des revendications 1 à 7, comprenant les étapes suivantes :
a) formation d'une ouverture de passage (5) dans une zone de liaison (4) de la première couche d'étanchéité (2) en laissant au moins une saillie (7) dépassant à l'intérieur de l'ouverture de passage (5),
b) formation d'une ouverture de passage (5) dans une zone de liaison (4) de la deuxième couche d'étanchéité (3) en laissant au moins une saillie (7') dépassant dans l'ouverture de passage (5'), de telle sorte que l'au moins une saillie (7'), lorsque la première couche d'étanchéité (2) et la deuxième couche d'étanchéité (3) sont superposées, ne recouvre pas, en projection de l'au moins une saillie (7') dans le plan de la première couche d'étanchéité (2), l'au moins une saillie (7) de la première couche d'étanchéité (2),
c) superposition des première et deuxième couches d'étanchéité (2, 3) de telle sorte que les saillies (7, 7') ne se recouvrent pas,
d) déformation de l'au moins une saillie (7) de la première couche d'étanchéité (2) au moins en partie hors du plan de la première couche d'étanchéité (2) en direction de la deuxième couche d'étanchéité (3), jusqu'à ce qu'au moins une partie de bord extérieur (71, 72) de la saillie (7) se trouve dans un plan situé derrière une partie de bord extérieur (71', 72') voisine d'une saillie (7') de la deuxième couche d'étanchéité (3), et
e) rabattement d'au moins une des parties de bord extérieur (71, 71', 72, 72') voisines, de sorte que la saillie (7) de la première couche d'étanchéité (2) passe derrière la saillie (7') de la deuxième couche d'étanchéité (3) au niveau des parties de bord extérieur (71, 71', 72, 72') voisines.

9. Procédé selon la revendication 8, dans lequel les étapes d) et e) sont réalisées avec un outil comportant deux parties d'outil (11, 12), dont l'une (11) est disposée sur des faces de la première couche d'étanchéité (2) et la deuxième (12) sur des faces de la deuxième couche d'étanchéité (3) et dans lequel au moins la première partie d'outil (11) présente au moins un poinçon (14) dépassant de la surface de forme de l'outil, qui vient reposer, lorsque les parties d'outil (11, 12) sont fermées, sur une partie de bord extérieur (71, 72) d'une saillie (7) de la première couche d'étanchéité (2), déforme cette partie de bord extérieur (71, 72) vers la deuxième couche d'étanchéité (3) lorsque la fermeture des parties d'outil (11, 12) se poursuit et rabat enfin la partie de bord extérieur (71, 72) de telle sorte que du matériau est refoulé de la partie de bord extérieur (71, 72) vers le côté dans un espace de refoulement situé derrière une partie de bord extérieur (71', 72') voisine de la deuxième couche d'étanchéité (3), de sorte que la saillie (7) de la première couche d'étanchéité (2) passe derrière la saillie (7') de la deuxième couche d'étanchéité (3) au niveau des parties de bord extérieur (71, 71', 72, 72') voisines.

10. Procédé selon la revendication 9, dans lequel la deuxième partie d'outil (12) présente au moins un au moins un poinçon (14) dépassant de la surface de forme de l'outil, qui vient reposer sur une partie de bord extérieur (71', 72') d'une saillie (7') de la deuxième couche d'étanchéité (3), déforme cette partie de bord extérieur (71', 72') vers la première couche d'étanchéité (2) lorsque la fermeture des parties d'outil (11, 12) se poursuit et rabat enfin la partie de bord extérieur (71', 72') de telle sorte que du matériau est refoulé de la partie de bord extérieur (71, 72) vers le côté dans un espace de refoulement situé derrière une partie de bord extérieur (71, 72) voisine de la première couche d'étanchéité (2), de sorte que la saillie (7') de la deuxième couche d'étanchéité (3) passe derrière la saillie (7) de la première couche d'étanchéité (2) au niveau des parties de bord extérieur (71, 71', 72, 72) voisines.
